# EUROPEAN PATENT APPLICATION

(11) **EP 1 045 138 A2**
(43) Date of publication of application: **18.10.2000**
(21) Application number: 00107766.8
(22) Date of filing: 11.04.2000
(51) Int. Cl.: F03B 13/18, F03B 13/12

(54) **A plant for pumping water using the kinetic energy of the sea's waves or tides**

(30) Priority: 15.04.1999 IT VI990073
(71) Applicant: Beria, Claudio, 36100 Vicenza (IT); Beria, Antonio, 36100 Vicenza (IT)
(72) Inventor: Beria, Claudio, 36100 Vicenza (IT); Beria, Antonio, 36100 Vicenza (IT)
(74) Representative: Bettello, Pietro, Dott. Ing.

(57) **Abstract**

A plant for pumping water, particularly for using the kinetic energy of the sea's waves or tides, characterised in that it comprises a float that regulates the working of a cylinder/piston system with two counteracting suction/force chambers; said chambers are fitted with at least one suction pipe that draws from a water basin or from the sea and a delivery pipe that discharges the pumped water directly to the consumer or into a storage tank, which may eventually be pressurised.

## Description

The finding concerns the production of a plant for pumping water from a natural or artificial basin using the kinetic energy of the sea's waves or variations in water level caused by tides, as well as a means of storing potential energy of the pumped water to create water reservoirs set at a higher quota to the level of the water basin that feeds the plant.

It is common knowledge how the search for a solution to the energy problem constitutes one of the fundamental dilemmas of our age, trying different systems and principles, all attempting to produce energy with the maximum yield possible.

The scope of this finding is to produce a water pumping plant that operates without the contribution of external sources of energy, since it only exploits the variation in level of a water basin or the motion of the tides and allows the storage of energy possessed by the pumped liquid.

The plant finding basically consists of a float that governs the operation of a cylinder/piston system with two counteracting suction/force chambers.

Each of said two chambers is fitted with at least one suction pipe that draws from the water basin or the sea and one delivery pipe that discharges the pumped water directly to the consumer or into a storage tank, which may eventually be pressurised.

In order to provide a better understanding of the construction and characteristics of this finding, two possible forms of execution will be described, given merely as a typical example and not a limitation, with reference to the attached plates, where:
- fig. 1 illustrates a diagram in elevation of the plant finding in a first form of execution;
- fig.2 illustrates a diagram in elevation of the plant finding in a second form of execution;

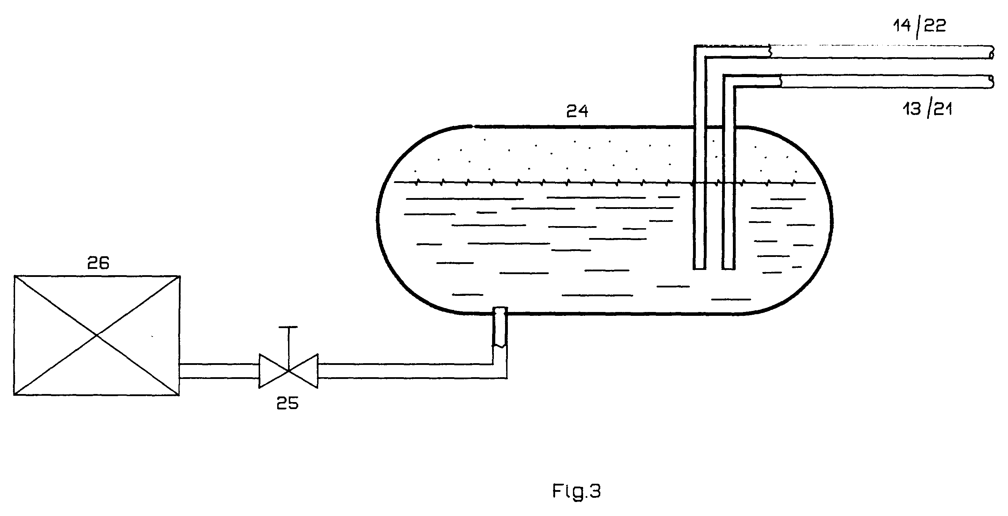

- fig.3 illustrates an operating diagram of the storage tank for the pumped water.

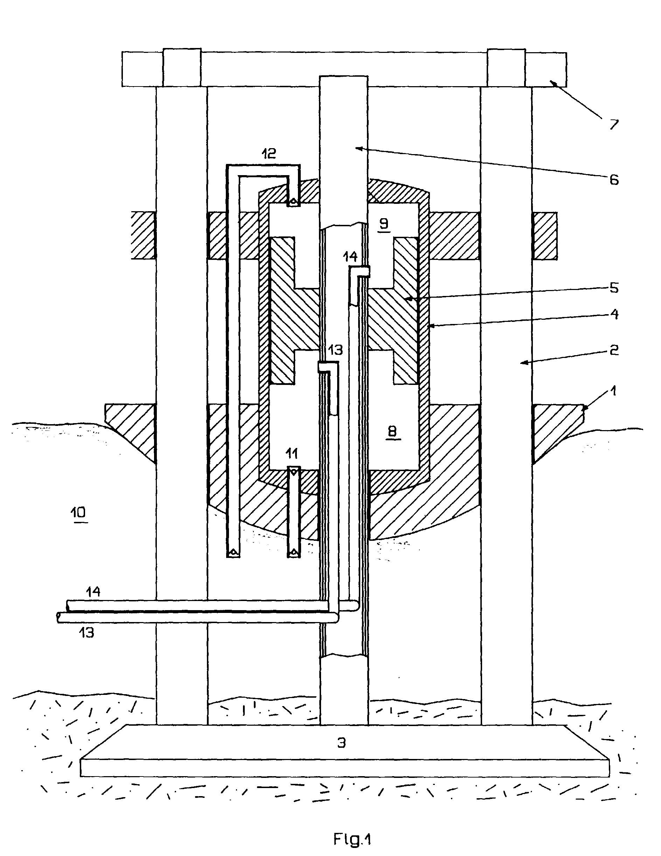

As can be seen in fig. 1, in a first form of execution the plant includes an adequately sized float 1, which tends to follow the wave motion of the water in a basin or the sea or otherwise of the tides, with a vertical rocking movement and guided by the columns 2, fixed to a base 3 on the bed of the water basin.

The float 1 is coaxially one solid piece with a cylinder 4, which therefore also slides vertically and is held in line by the columns 2.

Inside the cylinder 4 there is an intermediate immobile body 5 supported by a central upright 6 fixed to the base 3 and to the crossbeam 7 that links the columns 2.

In this way the inside of the cylinder 4 is constructed so that it provides two counteracting chambers 8 and 9 respectively.

Each of said two chambers is communicating with the water in the water basin 10 by at least one suction pipe 11 and 12 respectively.

Once again said two chambers are each fitted with at least one discharge pipe 13 and 14 respectively, connected to the consumer equipment or to a storage tank, which will be described below.

Another unique feature of the finding, in this first form of execution, is that the series of delivery pipes 13 and 14 is housed inside the central upright 6 that, as an advantage, has a tubular section.

This construction therefore creates a suction/force pump that operates without any contribution from an external driving energy, since the variation in volume of the two chambers 8 and 9 is achieved by the movement of the float 1, caused by a change in the water level of the basin.

In this way the inside of the cylinder 4 is constructed so that it provides two counteracting chambers 8 and 9 respectively. Each of said two chambers is communicating with the water in the water basin 10 by at least one suction pipe 11 and 12 respectively.

Again said two chambers are each fitted with at least one discharge pipe 13 and 14 respectively, connected to the consumer equipment or to a storage tank, which will be described below.

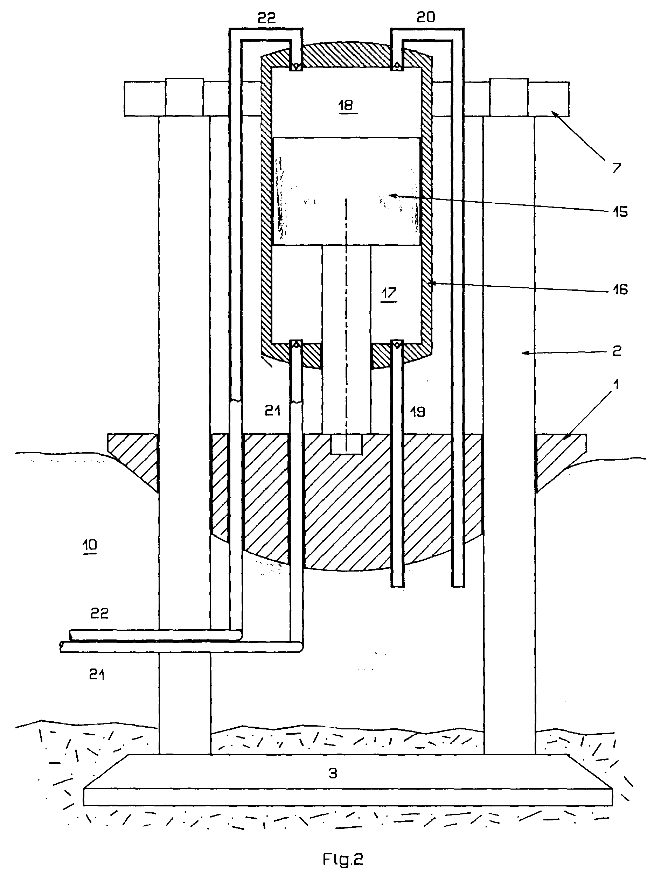

As can be seen in fig.2, in a second form of execution, the float 1 is coaxially a solid piece with a piston 15 sliding within a cylinder 16 supported by the columns 2 that guide the actual float.

In this way the inside of the cylinder 16 is constructed so that it provides two counteracting chambers 17 and 18 respectively.

Each of said two chambers is connected to at least one suction pipe 19 and 20 respectively, from the water basin 10, and at least one discharge pipe 21 and 22 respectively, said two latter pipes being connected to the consumer equipment or to a storage tank.

Both plants are fitted with non-return valves, suitably mounted on the pipes, to create the simultaneous suction/force action in the two chambers.

Finally, the, finding, in combination with the two plants described above, implements a storage tank 24 connected to the water discharge pipes 13, 14 and 21, 22.

An advantage of the tank is that when the plant is started up, it can be put under pressure by containing compressed air, so that the pumped water, since it will not be compressed, creates a reduction in the volume occupied by the air; and consequently increases the pressure inside the actual tank.

When the pressure inside the tank has reached a pre-set level, the pressurised water can be discharged by actuating the valve 25, so that its force of motion can be used to operate an external energy supply 26.

An additional task of the storage tank 24 is to make up for temporary reductions in the plant's operation due to diminished wave motion, maintenance or during the pause between one wax of the tide and the next.

It is clear that different forms of execution other than those illustrated may be possible, while maintaining the unique feature of the finding, involving the use of a float moved by the wave motion or tides that operates a suction/force pump.

## Claims

1. WATER PUMPING PLANT, especially designed for implementing the wave motion and tides, characterised in that it involves a float that governs the operation of a cylinder/piston system with two counteracting suction/force chambers, said two chambers being fitted with at least one suction pipe that draws from a water basin or the sea and a delivery pipe that discharges the pumped water directly to the consumer or into a storage tank, which may eventually be pressurised.

2. WATER PUMPING PLANT, according to claim 1, characterised in that it includes a float (1), of adequate size, which tends to follow the wave motion of the water in a basin or the sea or otherwise of the tides, with a vertical rocking movement and guided by the columns (2), fixed to a base (3) on the bed of the water basin, said float (1) being coaxially one solid piece with a cylinder (4), which therefore also slides vertically and is held in line by the columns (2), the inside of said cylinder (4) having an intermediate immobile body (5), supported by a central upright (6) fixed to the base (3) and to the crossbeam (7) that links the columns 2, thereby creating inside said cylinder (4) two counteracting chambers (8,9), each of said two chambers being communicating with the water in the water basin (10) by means of at least one suction pipe (11,12), again said chambers each being fitted with at least one discharge pipe (13,14) connected to the consumer equipment or to a storage tank (24).

3. WATER PUMPING PLANT, according to claim 2, characterised in that the series of delivery pipes (13,14) is housed inside the central upright (6), that has a tubular section;

4. WATER PUMPING PLANT, according to claim 1, characterised in that it includes a float (1), of adequate size, which tends to follow the wave motion of the water in a basin or the sea or otherwise of the tides, with a vertical rocking movement and guided by the columns (2), fixed to a base (3) on the bed of the water basin, said float (1) being coaxially one solid piece with a piston (15) that slides inside a cylinder (16) supported by the guide columns of the actual float, thereby creating inside said cylinder (16) two counteracting chambers (17,18), each of said chambers being communicating with the water in the water basin (10) by at least one suction pipe (19,20), again said chambers each being fitted with at least one discharge pipe (21 ,22) connected to the consumer equipment or to a storage tank (24).

5. WATER PUMPING PLANT, according to any one or more of the above claims, characterised in that it creates a suction/force pump that operates without the contribution of an external driving energy, since the variation in volume of the two chambers (8,9 and 17,18) is governed by the movement of the float (1), caused by a change in the water level of the water basin (10).

6. WATER PUMPING PLANT, according to any one or more of the above claims, characterised in that it involves the use of a storage tank (24) connected to the water discharge pipes (13,14 and 21,22), said tank tending to be found, on starting up the plant, under pressure, containing compressed air so that the pumped water it contains creates a reduction in the volume occupied by the air and consequently increases the pressure inside the actual tank and when this inside pressure reaches a pre-set level, the valve (25) shall discharge the pressurised water so that its energy can be used to operate an external energy supply (26).
